# EUROPEAN PATENT APPLICATION

(11) **EP 3 514 405 A1**
(43) Date of publication of application: **24.07.2019**
(21) Application number: 18203913.1
(22) Date of filing: 01.11.2018
(51) Int. Cl.: F16H 55/06, F16H 55/17

(54) **GEAR WITH CERAMIC HUB AND METALL TEETH AND MANUFACTURING METHOD THEREOF**

(30) Priority: 30.11.2017 GB 201719907
(71) Applicant: Rolls-Royce plc, London SW1E 6AT (GB)
(72) Inventor: Clark, Daniel, Derby, Derbyshire DE24 8BJ (GB); Rawson, Martin, Derby, Derbyshire DE24 8BJ (GB)
(74) Representative: Rolls-Royce plc

(57) **Abstract**

A gear (101, 102, 103, 104, 10) comprising a hub (14) defining an outer surface (22, 26), the hub (14) comprising a ceramic material; and a first ring (16, 52) defining an inner surface (24, 38) and an outer surface (22, 26), the inner surface (24, 38) of the first ring (16, 52) being coupled to the outer surface (22, 26) of the hub (14) via a bond (28, 54), the outer surface (22, 26) of the first ring (16, 52) defining a plurality of gear teeth (30), and the first ring (16, 52) comprising a metallic material.

## Description

### TECHNOLOGICAL FIELD

The present disclosure concerns gears and methods of manufacturing gears.

### BACKGROUND

Turbomachinery (such as a gas turbine engine) may include an output shaft (connected to a propulsive fan or a propeller in an aero engine), a gearbox, a compressor section, a combustion section, and a turbine section. The gearbox is connected between the output shaft and the turbine section and may enable the output shaft to rotate more slowly than the turbine section.

The gearbox may be an epicyclic gearbox comprising a sun gear, a ring gear, and a plurality of intermediate gears positioned between the sun gear and the ring gear. Where the gearbox is a planetary gearbox, the ring gear is fixed and the intermediate gears are mounted on a planet carrier and are arranged to rotate about the sun gear. Where the gearbox is a star gearbox, the intermediate gears are fixed in position by a static frame, and the ring gear is arranged to rotate about the sun gear.

### BRIEF SUMMARY

According to a first aspect there is provided a gear comprising: a hub defining an outer surface, the hub comprising a ceramic material; and a first ring defining an inner surface and an outer surface, the inner surface of the first ring being coupled to the outer surface of the hub via a bond, the outer surface of the first ring defining a plurality of gear teeth, and the first ring comprising a metallic material.

The hub may comprise a body and a protrusion extending outwards from the body of the hub. The outer surface of the hub may be defined by the body and the protrusion.

The protrusion may extend from the body in an orientation comprising a radial component and an azimuth component.

The inner surface of the first ring may define a recess in which the protrusion of the hub is positioned.

The hub may define one or more cavities.

The gear may further comprise a second ring positioned between the outer surface of the hub and the inner surface of the first ring. The second ring may be bonded to the hub and to the first ring.

The second ring may comprise a material having a low coefficient of thermal expansion.

The material of the second ring may comprise Invar or an austenitic stainless steel.

The hub may define an inner surface. The gear may further comprise a bearing positioned adjacent the inner surface of the hub. The bearing may comprise a ceramic material.

The bond may be a diffusion bond, or may be an adhesive bond, or may be a braze bond.

According to a second aspect there is provided a gearbox comprising a gear as described in any of the preceding statements.

According to a third aspect there is provided a gas turbine engine comprising a gearbox as described in the previous statement.

According to a fourth aspect there is provided a method of manufacturing a gear, the method comprising: providing a hub defining an outer surface, the hub comprising a ceramic material; and coupling a first ring defining an inner surface and an outer surface to the outer surface of the hub via a bond, the outer surface of the first ring defining a plurality of gear teeth, and the first ring comprising a metallic material.

The hub may comprise a body and a protrusion extending outwards from the body of the hub. The outer surface of the hub may be defined by the body and the protrusion.

The protrusion may extend from the body in an orientation comprising a radial component and an azimuth component.

The inner surface of the first ring may define a recess in which the protrusion of the hub is positioned.

The hub may define one or more cavities.

The method may further comprise bonding a second ring to the outer surface of the hub and to the inner surface of the first ring.

The second ring may comprise a material having a low coefficient of thermal expansion.

The material of the second ring may comprise Invar or an austenitic stainless steel.

The hub may define an inner surface. The method may further comprise providing a bearing adjacent the inner surface of the hub. The bearing may comprise a ceramic material.

The bond may be a diffusion bond, or may be an adhesive bond, or may be a braze bond.

According to a fifth aspect there is provided a gear component comprising: a hub defining an outer surface, the hub comprising a ceramic material; and a first ring defining an inner surface coupled to the outer surface of the hub via a bond, the first ring comprising a metallic material.

According to a sixth aspect there is provided a method of manufacturing a gear component, the method comprising: providing a hub defining an outer surface, the hub comprising a ceramic material; and coupling a first ring defining an inner surface to the outer surface of the hub via a bond, the first ring comprising a metallic material.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a cross sectional side view of a gear according to a first example;
Fig. 2 illustrates a cross sectional side view of a gear according to a second example;
Fig. 3 illustrates a cross sectional side view of a gear according to a third example;
Fig. 4 illustrates a cross sectional side view of a gear according to a fourth example;
Fig. 5 illustrates a cross sectional side view of a gear according to a fifth example;
Fig. 6 illustrates a flow diagram of a method of manufacturing a gear according to various examples; and
Fig. 7 illustrates a schematic cross sectional side view of a gas turbine engine.

### DETAILED DESCRIPTION

In the following description, the terms 'connected' and 'coupled' mean operationally connected and coupled. It should be appreciated that there may be any number of intervening components between the mentioned features, including no intervening components.

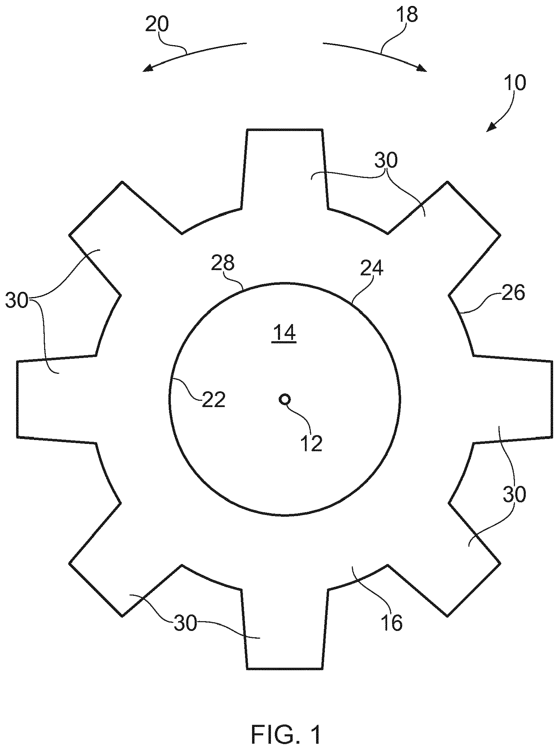

Fig. 1 illustrates a gear 10 according to a first example. The gear 10 has a rotational axis 12 and includes a hub 14 and a ring 16. The gear 10 may rotate about the rotational axis 12 in a clockwise direction as indicated by arrow 18, or in an anti-clockwise direction as indicated by arrow 20.

The hub 14 may have any suitable shape and may comprise any suitable ceramic material. For example, the hub 14 may have a cylindrical shape and may comprise silicon nitride (Si₃N₄). In other examples, the hub 14 may have a polygonal, elliptical, or oval cross sectional shape, and may comprise boron nitride. The hub 14 defines an outer surface 22 and may also define an inner surface (not illustrated in Fig. 1) for receiving a shaft or an axle. Where the hub 14 does not define an inner surface, the hub 14 may comprise an integral shaft that extends out of the hub 14 along the axis of rotation 12 (the integral shaft being part of, and comprising the same material as the hub 14).

The ring 16 may comprise any suitable metallic material. For example, the ring 16 may comprise steel suitable for gear application and capable of being surface hardened. The ring 16 defines an inner surface 24 and an outer surface 26. The inner surface 24 of the ring 16 is coupled to the outer surface 22 of the hub 14 via a bond 28. For example, the hub 14 and the ring 16 may be coupled by adhesive bonding, or by diffusion bonding, or may be coupled by a braze joint using a braze medium (for example, a silver base alloy). The outer surface 26 of the ring 16 defines a plurality of gear teeth 30.

The gear 10 may be advantageous in that since the hub 14 comprises a ceramic material, the gear 10 may be lighter and stiffer than a wholly metallic gear. Additionally, the bond 28 between the hub 14 and the ring 16 may enable the gear 10 to operate at higher loads and have increased operational life.

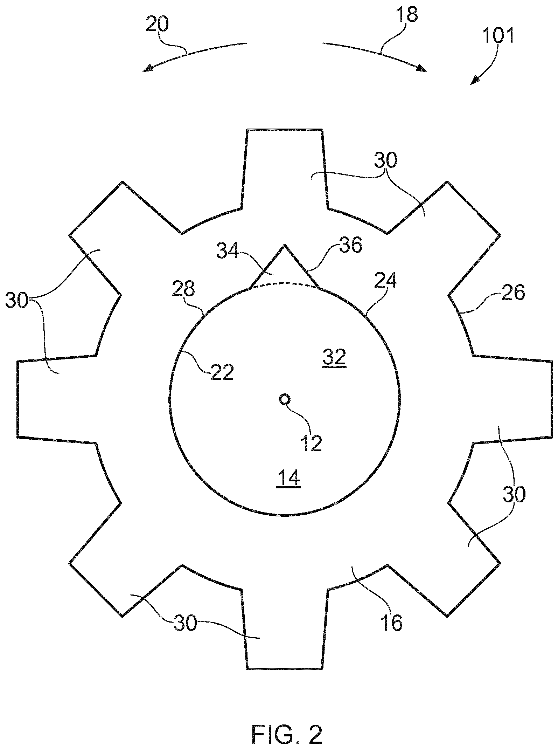

Fig. 2 illustrates a gear 101 according to a second example. The gear 101 is similar to the gear 10 and where the features are similar, the same reference numerals are used.

The hub 14 of the gear 101 comprises a body 32 and a protrusion 34 extending outwards from the body 32 of the hub 14. The outer surface 22 of the hub 14 is by the body 32 and the protrusion 34. The inner surface 24 of the ring 16 defines a recess 36 in which the protrusion 34 of the hub 14 is positioned.

In more detail, the protrusion 34 extends radially outwards from the body 32 relative to the axis of rotation 12. The protrusion 34 may be integral with the body 32. In other words, the protrusion 34 may be part of the body 32 and comprise the same material as the body 32. Alternatively, the protrusion 34 may be coupled to the body 32 (for example, by an adhesive) and may comprise a different material to the body 32.

The protrusion 34 is illustrated as having a triangular cross sectional shape in Fig. 2, but it should be appreciated that in other examples, the protrusion 34 may have any other suitable shape. For example, the protrusion 34 may have a polygonal cross sectional shape (a square shape or a trapezium shape for example), or may have a curved cross sectional shape (an oval shape for example).

The recess 36 in the inner surface 24 of the ring 16 may have a cross sectional shape that is the same as the cross sectional shape of the protrusion 34. For example, where the protrusion 34 has a triangular cross sectional shape, the recess 36 may have a triangular cross sectional shape for receiving the protrusion 34 therein. In other examples, the recess 36 in the inner surface 24 of the ring 16 may have a different cross sectional shape to the cross sectional shape of the protrusion 34. In these examples, an intermediate member or members may be provided between the recess 36 and the protrusion 34 to fill the gap.

The gear 101 may be advantageous in that the protrusion 34 may support load transmission between the hub 14 and the ring 16 and may reduce shear along the interface between the hub 14 and the ring 16.

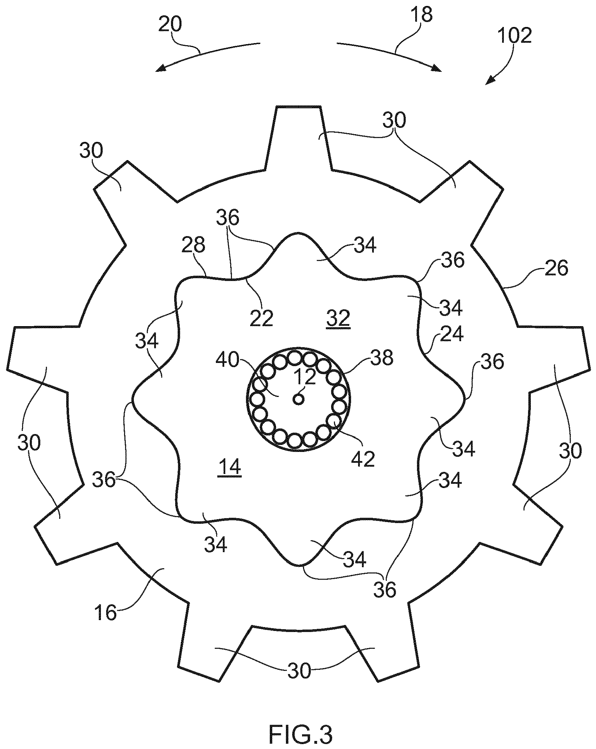

Fig. 3 illustrates a gear 102 according to a third example. The gear 102 is similar to the gear 101 and where the features are similar, the same reference numerals are used.

The hub 14 of the gear 102 comprises a plurality of curved protrusions 34 that extend radially outwards into a plurality of corresponding recesses 36 defined by the inner surface 24 of the ring 16. The protrusions 34 may be evenly or unevenly spaced around the axis of rotation 12 and may have rotational symmetry. The number and distribution of the protrusions 34 may be selected to optimize the centre of gravity of the gear 102. The size of the protrusions 34 may be selected to optimize the gear 102 for the torque loading being carried/transmitted by the gear 102.

The hub 14 comprises an inner surface 38 that defines a central hole 40 for receiving a shaft or an axle. The gear 102 comprises a bearing 42 positioned adjacent the inner surface 38 and within the central hole 40. The bearing 42 may be any suitable type of bearing and may comprise a ceramic material. For example, the bearing 42 may be a rolling element bearing (such as a ball bearing or a roller bearing) and may comprise silicon nitride (Si₃N₄).

The gear 102 may provide several advantages. First, the plurality of protrusions 34 may significantly reduce shear at the interface between the hub 14 and the ring 16. Second, where the bearing 42 comprises a ceramic material, the wear rate of the bearing 42 may be relatively low due to ceramic on ceramic contact.

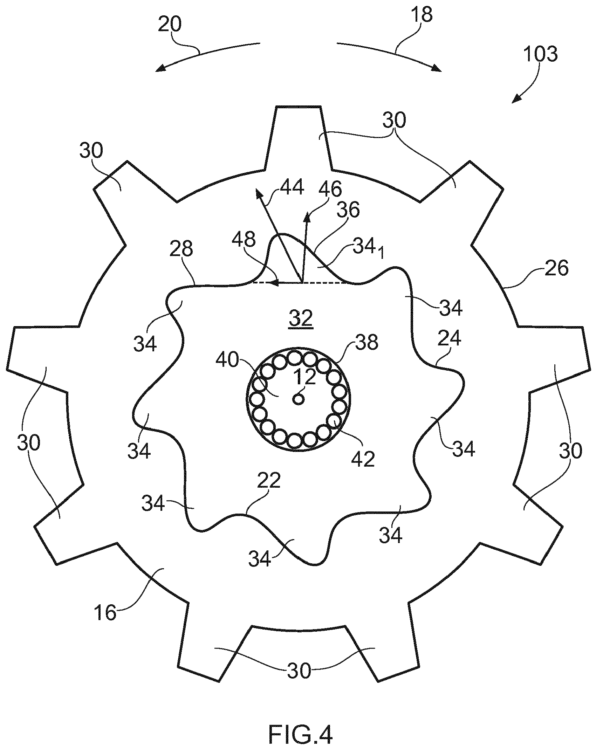

Fig. 4 illustrates a gear 103 according to a fourth example. The gear 103 is similar to the gear 102 and where the features are similar, the same reference numerals are used.

The gear 103 includes a plurality of protrusions 34 that extend from the body 32 in orientations that comprise a radial component and an azimuth component. For example, the protrusion 34₁ has a longitudinal axis having an orientation 44 comprising a radial component 46 and an azimuth component 48. This orientation of the protrusions 34 may be advantageous in that the protrusions 34 may support load transmission in one direction greater than the opposite direction. For example, the protrusions 34 illustrated in Fig. 4 are oriented to provide greater support against loads (at the interface between the hub 14 and the ring 16) in the direction of arrow 18, than loads in the direction of arrow 20.

It should be appreciated that in some examples, a first subset of the protrusions 34 may have an orientation comprising a radial component and an azimuth component and a second subset of the protrusions 34 may have an orientation only comprising a radial component.

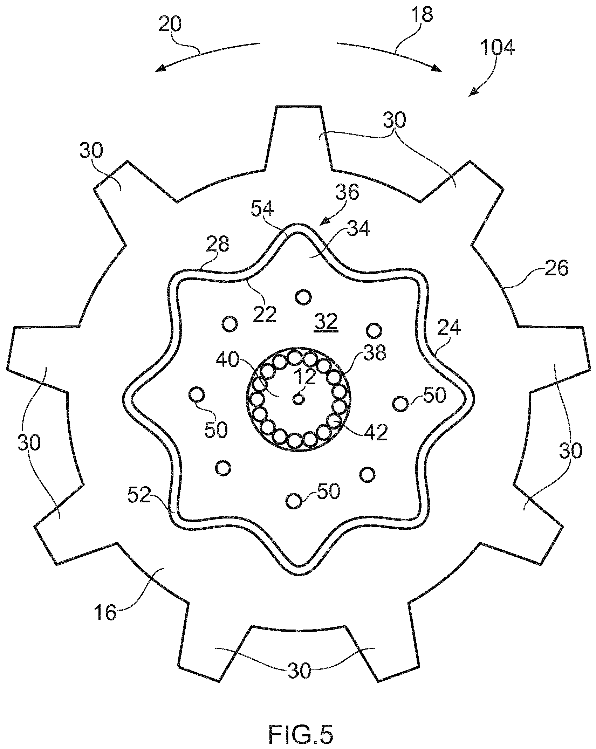

Fig. 5 illustrates a gear 104 according to a fifth example. The gear 104 is similar to the gear 102 and where the features are similar, the same reference numerals are used.

The hub 14 of the gear 104 defines a plurality of cavities 50 therein. The cavities 50 may be holes that extend all the way through the hub 14, may be blind holes, or may be wholly enclosed by the ceramic material of the hub 14. The plurality of cavities 50 may advantageously reduce the weight of the hub 14 and thus reduce the weight of the gear 104.

The gear 104 includes a second ring 52 positioned between the outer surface 22 of the hub 14 and the inner surface 24 of the first ring 16. The shape of the second ring 16 corresponds to the shape of the outer surface 22 of the hub 14 and the shape of the inner surface 24 of the first ring 16. The second ring 52 is coupled to the hub 14 via a bond 54, and is coupled to the first ring 16 via the bond 28. The bond 54 may be an adhesive bond or a diffusion bond, and the bond 28 may be an adhesive bond or a diffusion bond.

The second ring 16 may comprise any suitable material having a low coefficient of thermal expansion (that is, a coefficient of thermal expansion between 1.3 and 2.1 cm per cm per °C per 10-6 between the temperatures of 30 °C and 200 °C for example). For example, the second ring 16 may comprise austenitic stainless steel, Invar (FeNi36, 64FeNi in the USA).

The second ring 16 may advantageously accommodate strains induced by differential thermal expansions and contractions during the manufacture of the gear 104. Consequently, the gear 104 may have reduced stress at the interface between the hub 14 and the ring 16.

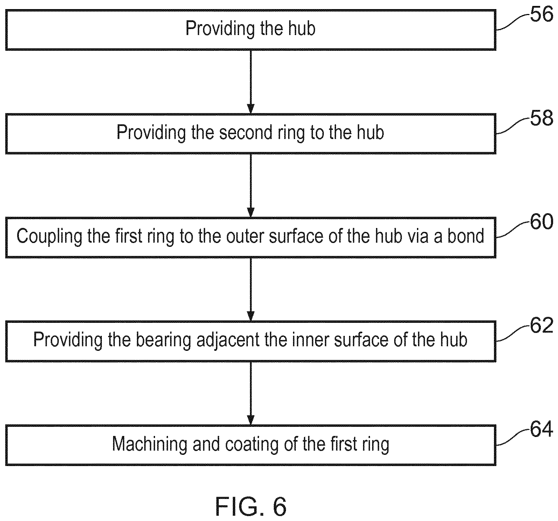

Fig. 6 illustrates a flow diagram of a method of manufacturing a gear according to the disclosure. For example, the method may be used to manufacture the gear 10, the gear 101, the gear 102, the gear 103 and the gear 104.

At block 56, the method includes providing the hub 14. For example, the hub 14 may be formed by providing powdered material (such as silicon nitride or boron nitride) in a mould, and then heating the powdered material in a kiln. In another example, the hub 14 may be formed by hot isostatically pressing powdered material. In a further example, the hub 14 may be formed by sintering powdered material in a sintering furnace.

At block 58, the method may include providing the second ring 52 to the hub 14. For example, the second ring 52 may be provided to the hub 14 by wrapping a wire or sheet of low coefficient of thermal expansion material around the hub 14. In some examples, the wire or sheet may be bonded to the hub 14 via an adhesive. By way of another example, the second ring 52 may be provided to the hub 14 by coating a low coefficient of thermal expansion material on the hub 14. For example, the second ring 52 may be coated on the hub 14 using direct laser deposition (DLD).

At block 60, the method includes coupling the first ring 16 to the outer surface 22 of the hub 14 via the bond 28. For example, the first ring 16 may be coupled to the outer surface 22 of the hub 14, or to the second ring 52, by an adhesive.

By way of another example, the first ring 16 may be coupled to the hub 14 by hot isostatic pressing. In more detail, the hub 14 and a powdered metallic material may be inserted into a canister and then subjected to high pressure and a high temperature to provide the first ring 16. For example, the pressure may be any pressure between 50 MPa and 310 MPa, or any pressure between 100 MPa and 110 MPa. The temperature may be any temperature between 480 Celsius and 1300 Celsius, or between 700 Celsius and 1100 Celsius, or between 970 Celsius and 990 Celsius. The use of hot isostatic pressing forms a diffusion bond between the first ring 16 and the hub 14, or between the first ring 16 and the second ring 52 (where present).

By way of a further example, the first ring 16 may be coupled to the hub 14 by sintering a powdered metallic material on the hub 14, and then forging the sintered powdered metallic material. The forging of the sintered powdered metallic material forms a diffusion bond between the first ring 16 and the hub 14, or between the first ring 16 and the second ring 52 (where present).

By way of another example, the first ring 16 may be coupled to the hub 14 via a braze joint. For example, the first ring 16 and the hub 14 may be brazed together using an appropriate filler material (a silver base alloy for example).

At block 62, the method may include providing the bearing 42 adjacent the inner surface 38 of the hub 14. For example, a plurality of roller elements may be secured in contact with the inner surface 38 of the hub 14 by an inner race.

At block 64, the method may include machining and coating of the first ring 16. For example, the teeth 30 of the first ring 16 may be machined so that they have a desired shape and then coated (carburized for example).

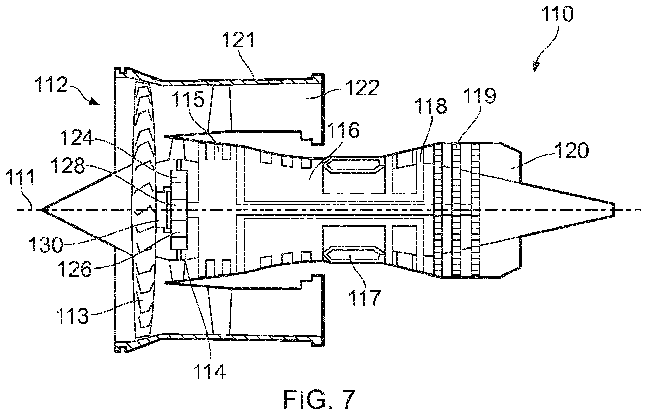

Fig. 7 illustrates a schematic cross sectional view of a gas turbine engine 110 having a principal and rotational axis 111. The gas turbine engine 110 comprises, in axial flow series, an air intake 112, a propulsive fan 113, a gearbox 114, an intermediate pressure compressor 115, a high-pressure compressor 116, combustion equipment 117, a high-pressure turbine 118, a low-pressure turbine 119 and an exhaust nozzle 120. A fan case 121 surrounds the fan 113, the intermediate pressure compressor 115, and the high pressure compressor 116.

In operation, air entering the intake 112 is accelerated by the fan 113 to produce two air flows: a first air flow into the intermediate pressure compressor 115 and a second air flow which passes through a bypass duct 122 to provide propulsive thrust. The intermediate pressure compressor 115 compresses the air flow directed into it before delivering that air to the high pressure compressor 116 where further compression takes place.

The compressed air exhausted from the high-pressure compressor 116 is directed into the combustion equipment 117 where it is mixed with fuel and the mixture combusted. The resultant hot combustion products then expand through, and thereby drive the high pressure turbine 118 and the low-pressure turbine 119 before being exhausted through the nozzle 120 to provide additional propulsive thrust. The high pressure turbine 118 and the low pressure turbine 119 drive respectively the high pressure compressor 116 and intermediate pressure compressor 115, each by a suitable interconnecting shaft. The low pressure shaft 119 also drives the fan 113 via the gearbox 114. The gearbox 114 is a reduction gearbox in that it gears down the rate of rotation of the fan 113 by comparison with the intermediate pressure compressor 115 and low pressure turbine 119. The gearbox 114 comprises one or more of the gears 10, 101, 102, 103, 104.

The gearbox 114 may be an epicyclic planetary gearbox and may have a static ring gear 124, rotatable planet gears 126, a rotatable sun gear 128, and a planet carrier 130 supporting the planet gears 126. The fan 113 is connected to the planet carrier 130. The ring gear 124, the planet gears 126 and the sun gear 128 may have the structure of any of the gears 10, 101, 102, 103, 104.

Other gas turbine engines to which the present disclosure may be applied may have alternative configurations. By way of an example, the gearbox 114 may be a star gearbox rather than an epicyclic planetary gearbox. Additionally or alternatively, the gearbox 114 may drive additional and/or alternative components (for example, the intermediate pressure compressor and/or a booster compressor). Additionally or alternatively, such gas turbine engines may have an alternative number of compressors and/or turbines and/or an alternative number of interconnecting shafts. In some examples, the gas turbine engine 110 may not comprise a fan 113 or a fan case 121, and may instead comprise an output shaft for connection to an electrical generator (that is, the gas turbine engine 110 may be a turbo-shaft engine).

It will be understood that the invention is not limited to the embodiments above-described and various modifications and improvements can be made without departing from the concepts described herein. For example, other gear components (such as the planet carrier 130) may have a structure that is similar to the structure of the gears 10, 101, 102, 103, 104. In particular, such a gear component comprises a hub defining an outer surface and comprising a ceramic material. The gear component also comprises a first ring defining an inner surface coupled to the outer surface of the hub via a bond, the first ring comprising a metallic material.

Except where mutually exclusive, any of the features may be employed separately or in combination with any other features and the disclosure extends to and includes all combinations and sub-combinations of one or more features described herein.

## Claims

1. A gear comprising:
a hub defining an outer surface, the hub comprising a ceramic material; and
a first ring defining an inner surface and an outer surface, the inner surface of the first ring being coupled to the outer surface of the hub via a bond, the outer surface of the first ring defining a plurality of gear teeth, and the first ring comprising a metallic material.

2. A gear as claimed in claim 1, wherein the hub comprises a body and a protrusion extending outwards from the body of the hub, the outer surface of the hub being defined by the body and the protrusion.

3. A gear as claimed in claim 2, wherein the protrusion extends from the body in an orientation comprising a radial component and an azimuth component.

4. A gear as claimed in claim 2 or 3, wherein the inner surface of the first ring defines a recess in which the protrusion of the hub is positioned.

5. A gear as claimed in any of the preceding claims, wherein the hub defines one or more cavities.

6. A gear as claimed in any of the preceding claims, further comprising a second ring positioned between the outer surface of the hub and the inner surface of the first ring, the second ring being bonded to the hub and to the first ring.

7. A gear as claimed in claim 6, wherein the second ring comprises a material having a low coefficient of thermal expansion.

8. A gear as claimed in claim 6 or 7, wherein the material of the second ring comprises Invar or an austenitic stainless steel.

9. A gear as claimed in any of the preceding claims, wherein the hub defines an inner surface, the gear further comprising a bearing positioned adjacent the inner surface of the hub, the bearing comprising a ceramic material.

10. A gear as claimed in any of the preceding claims, wherein the bond is a diffusion bond, or is an adhesive bond, or is a braze bond.

11. A gearbox comprising a gear as claimed in any of the preceding claims.

12. A gas turbine engine comprising a gearbox as claimed in claim 11.

13. A method of manufacturing a gear, the method comprising:
providing a hub defining an outer surface, the hub comprising a ceramic material; and
coupling a first ring defining an inner surface and an outer surface to the outer surface of the hub via a bond, the outer surface of the first ring defining a plurality of gear teeth, and the first ring comprising a metallic material.

14. A method as claimed in claim 13, further comprising bonding a second ring to the outer surface of the hub and to the inner surface of the first ring.

15. A method as claimed in claim 13 or 14, wherein the hub defines an inner surface, and the method further comprises providing a bearing adjacent the inner surface of the hub, the bearing comprising a ceramic material.
